# EUROPEAN PATENT SPECIFICATION

(11) **EP 3 254 068 B1**
(45) Date of publication and mention of the grant of the patent: **15.01.2020**
(21) Application number: 16732350.0
(22) Date of filing: 05.02.2016
(51) Int. Cl.: G01G 19/52, G01L 1/22

(54) **LOCKING DEVICE FOR SECURING A CORNER CASTING OF A CONTAINER, AS WELL AS WEIGHING DEVICE AND METHOD FOR DETERMINING THE WEIGHT OF A CONTAINER OR A STACK OF CONTAINERS**
VERRIEGELUNGSVORRICHTUNG ZUR SICHERUNG EINES ECKBESCHLAG EINES BEHÄLTERS SOWIE WIEGEVORRICHTUNG UND VERFAHREN ZUR BESTIMMUNG DES GEWICHTES EINES BEHÄLTERS ODER EINES STAPELS VON BEHÄLTERN
DISPOSITIF DE VERROUILLAGE POUR FIXER UNE PIÈCE COULÉE DE COIN D'UN CONTENANT AINSI QUE DISPOSITIF DE PESAGE ET PROCÉDÉ DE DÉTERMINATION DU POIDS D'UN CONTENANT OU D'UN EMPILEMENT DE CONTENANTS

(30) Priority: 06.02.2015 NL 2014261
(43) Date of publication of application: 13.12.2017
(73) Proprietor: Vroon B.V., 4822 NJ Breda (NL)
(72) Inventor: SCHRIJVER, Johannes Hendrikus Evert, 4371 NH Koudekerke (NL); BEEKMANN, Jasper, 1403 RM Bussum (NL)
(74) Representative: Kuhnen & Wacker Patent- und Rechtsanwaltsbüro PartG mbB
(86) International application number: PCT/NL2016/050086
(87) International publication number: WO 2016/126163

(56) References cited:
- WO-A1-99/24287
- DE-U1-202005 017 815
- US-A1- 2007 119 195

## Description

### Field of the invention

The present invention relates to a locking device for securing a corner casting of a container on a container foundation, the locking device comprising: a body for fitting on the container foundation, on which the container with a corner casting is stowed; at least one sensor which emits a measuring signal related to the weight loaded on top of the locking device; and an electronic unit coupled to the sensor, as well as a transmitter connected to the electronic unit. Moreover, the present invention relates to a weight device with such a locking device and a method for determining the weight of a container which is placed with its corner castings.

The container foundation may be integrated into a bar of a chassis of a container vehicle (train wagon or truck or semi-trailer) or in a hatch cover of a sea going vessel, or may be mounted on a beam or such a hatch cover plate.

### Prior art

Such a locking device is generally known and is used for the four corner points to lock the underside of the container on a container foundation present on the hatch cover of a sea going vessel.

At sea container vessels, containers regularly go overboard in spite of the fact that these containers are lashed with certified lashing material and lashing system. Apart from material damage this can result in heavy environment pollution in case the cargo contains toxins. The cause may be often overloaded containers with weights above the allowable values for the vessel.

The ship's officers don't know the actual weights of the containers to be loaded and is entirely dependent on the information provided by the onshore organization c.q. companies that are not part of the own organization with different interests and objectives.

As main cause is generally seen:
- Poor condition of the container.
- Sailing with too high-speed in bad weather.
- Use of defective / damaged container lashing material.
- Poor securing container lashing material by shore personnel.
- Poor supervision of the lashing / loading by crew.
- High acceleration forces by excessive stability (rigid vessel).

However, experience shows that containers also go overboard due to a too high stack weight or heavy containers loaded on lighter containers.

The tenn "stack weight" is the total weight of a container or a stack of containers. Current maximum values on deck for a 20 feet container is 60 metric tons and for a 40 feet container is 90 metric tons. Overruns of 30 % are not uncommon. At overruns the forces are that great that something should break, or the lashings or container itself, heavy containers on lighter containers have a similar effect.

The maximum weight of one container is about 30 metric tons, a stack can consist of 6 or more containers. The containers at the top of a stack are generally empty.

Reason for excess weight stack:
- Typo manifesto.
- Export fraud.
- Net - instead of Tare weight assignment - (empty container weighs 2.5 Mt).
- shipper just don't wants to leave "that container".

WO 99/24287 A1 teaches a locking device according to the preamble of claim 1. This locking device is particularly designed for securing a container to a vehicle chassis. The device comprises a compression chamber containing a compression material that is forced outwards when a container is placed on the device. At various locations a visual readout allows the recognition of load on each device.

### Summary of the invention

An object of the invention is to find a solution to the problem of getting overboard of containers. Generally speaking, the solution according to the invention is situated in the measurement of the weight of the container or stack of containers present on a vessel, and of the individual containers in the stack. To realize this without any adaptation of the conventional manner of placing containers on the vessel the present invention provides a locking device as defined in claim 1. In particular it has been devised to integrate the sensors required for this purpose in the conventional locking devices. For this purpose, the locking device according to the invention comprises at least one sensor which outputs a measurement signal related to the weight present on the locking device and the locking device further comprises an electronic unit coupled to the sensor as well as a transmitter connected to the electronic unit. This locking device is characterized in that the sensor is arranged between the container casting and the container foundation; and in that the sensor comprises two strain gauges which are arranged on the wall of a cylinder, which cylinder is arranged in a through hole in the body and protrudes above and below the body. With the aid of the locking device according to the invention the weight of the containers can be measured. By measuring the container weights onboard ship's officers can enforce corrective measures timely before the ship goes to sea in case of overloaded containers.

By coupling the sensor with a processing unit the weight on the locking device can be determined on the basis of the received measurement signal. With evenly loaded containers, it is sufficient to measure the weight under one comer casting in order to be able to determine the weight of the container(s) on the container foundations. In order to obtain a reliable measurement in case the containers are not evenly loaded, preferably, under at least two diagonally opposed corner points of the lower container a locking device according to the invention should be provided. The measuring signal can be sent directly by the electronic unit, or may be first processed by the electronic unit to a measurement value which is then transmitted.

The locking device preferably comprises of four cylinders provided with strain gauges. Preferably, two covers are arranged on the ends of the cylinders. Because of the covers, the weight is advantageously transferred to the cylinders and the risk of bending of the cylinders is further reduced.

Instead of the strain gauges being arranged on a cylinder they also may be arranged on other components, such as, for example, on one or more walls of the body through which the weight is passed to the container foundation.

Preferably, there is a further recess in the body containing the electronic unit and the transmitter coupled thereto, and preferably also a battery.

The locking device is preferably provided with four sensors which are present at the corner points of an imaginary square so that the upper part is stably present on the bottom part.

The body is preferably provided with a through-hole with a rotatable shaft in it, which shaft with both ends protrudes outside the body and which shaft at its ends is provided with locking elements mounted on the shaft.

The invention also relates to a weighing device for determining the weight of a container or a stack of containers on foundations. With regard to the weighing device, the invention is characterized in that the weighing device comprises at least one locking device according to the invention, as well as a processing unit which is provided with a receiver for receiving measurement signals emanating from the locking devices.

An embodiment of the weighing device according to the invention is characterized in that the processing unit comprises a calculation unit which is programmed such that it can determine the weight of the container from the received signals.

Furthermore, the invention relates to a method for determining the weight of a container or a stack of containers with the aid of the weighing device according to the invention, wherein on at least one of four existing container foundations, which are present on the corner points of an imaginary rectangle having the size of the bottom of the container, a locking device according to the invention is applied, and on the other container foundations locking devices without sensors are applied, and that after the placing of a container on the locking devices present on the container foundations, or on the container or stack of containers already present on the locking devices, the weight of the container or stack of containers is determined from the measurement signals from the sensor unit with the aid of the calculation unit, and this weight is stored.

With the weighing device and method according to the invention, the actual weights of the containers loaded on deck are determined, as well as the individual weights and the order of loaded containers in a stack.

Assuming evenly loaded containers, the weight of the container or stack of containers can be determined by measuring the weight on one or two of the four corner points (being present next to each other). The mass of the last loaded container can be calculated by each time after placing of a container, subtracting the weight on the locking devices measured prior to the placing of this container from the newly measured weights.

The invention also relates to a method for determining the weight of a container which is placed with the corner castings at the corner points of the bottom on four container foundations present on the corner points of an imaginary rectangle having the size of the bottom of the container, wherein before the container with the corner castings is placed on the container foundations, first locking elements are arranged on the container foundations and after placing of the container, the corner castings are locked to the container foundations by means of these locking elements.

With regard to this method the invention is characterized in that prior to arranging the locking elements on the container foundations, first a sensor unit is placed on at least one of the container foundation, or after the locking elements are arranged on the container foundations a sensor unit is placed on at least one of the locking elements, and after the container with its corner castings is placed on the locking elements and/or on the sensor unit, a signal related to the weight on the sensor unit transmitted by the sensor unit is received by a processing unit which determines the weight of the container from this signal.

### Brief description of the drawings

Below, the invention will be explained in more detail with reference to an embodiment shown in the drawings of the weighing device according to the invention. In these drawings:
Figure 1 shows a stack of containers with underneath locking devices of the weighing device according to the invention;
Figure 2 shows the layout of the electronic components of one of the locking devices and of the processing unit of the weighing device;
Figure 3 shows a first embodiment of the locking device according to the invention in perspective seen from above;
Figure 4 shows the locking device in a perspective seen from below shown in Figure 3;
Figure 5 shows the latching device illustrated in Figure 3 in perspective and partly in cross-section;
Figure 6 shows a second embodiment of the locking device according to the invention in perspective;
Figure 7 disassembled parts in the locking device shown in Figure 6;
Figure 8 shows the locking device in horizontal cross-section shown in Figure 6;
Figure 9 shows the locking device in vertical cross-section shown in Figure 6; and
Figure 10 is a detail of the cross-section of the locking device shown in Figure 9.

### Detailed description of the drawings

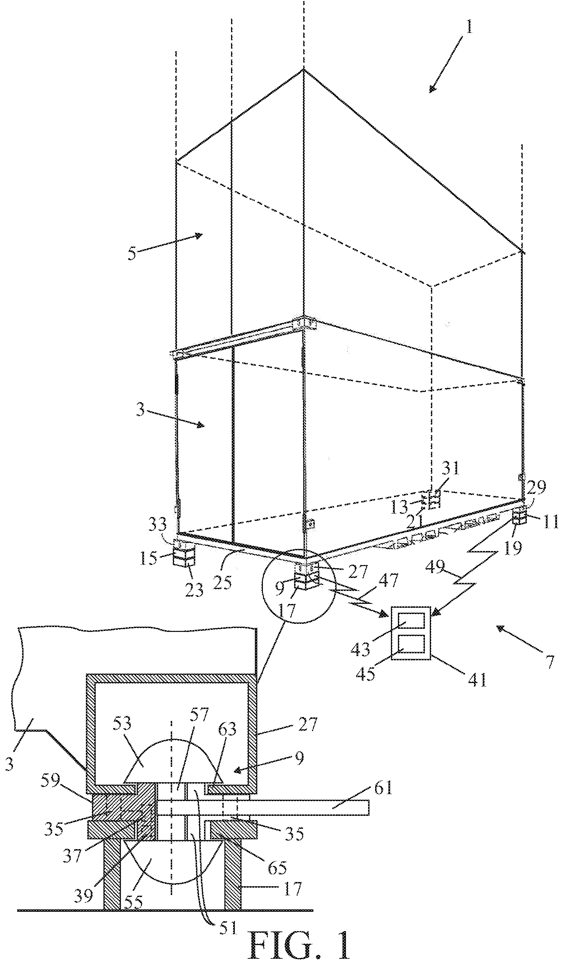

In Figure 1, a stack 1 of containers 3, 5 with underneath an embodiment of the weighing device 7 according to the invention is shown. The weighing device has two sensors provided with locking devices 9, 11 which are present on two container foundations 17, 19 being present side by side at corner points of an imaginary rectangle having the size of the bottom 25 of the container 3. On the other two container foundations 21, 23 well-known locking devices 13, 15 without sensors are present, which lock corner castings 31, 33 at the corner points of the container to the container foundations. During loading, a container 3 is placed with the corner castings 27-33 on the locking devices 9-15 and successively further containers 5 are stacked on the container 3.

The sensors 35 are coupled to electronic units 37, which are also part of the locking devices. The electronic units are connected to transmitters 39. The weighing device 7 further has a processing unit 41 which is provided with a receiver 43 and a calculation unit 45 with a memory. The calculation unit is programmed such that each time a container is placed on the locking devices or on the container or stack of containers already present on the locking devices, it determines the weight of the container or stack of containers on the locking device from the measurement signals 47, 49 derived from the locking devices 9, 11 and stores this weight in the memory.

Assuming evenly loaded containers, the weight of the container or stack of containers can be determined by measuring the weight on one or two of the four corner points (being present next to each other). By subtracting the previous determined weight from the newly determined weight the weight of the last loaded container can be calculated.

The container foundation and corner castings are each provided with an elongate opening 51 through which a latching projection 53, 55 of the locking device 9 is arranged. The locking elements are mounted on the ends of a shaft 57 which is rotatably provided in a hole 59 in a body. The shaft is furthermore provided with a handle 61 for rotating the shaft. By turning the lever 90 degrees after the locking elements have been inserted through the openings, the locking elements turn a quarter of a turn so that they hook behind the boundary walls 63, 65 of the openings.

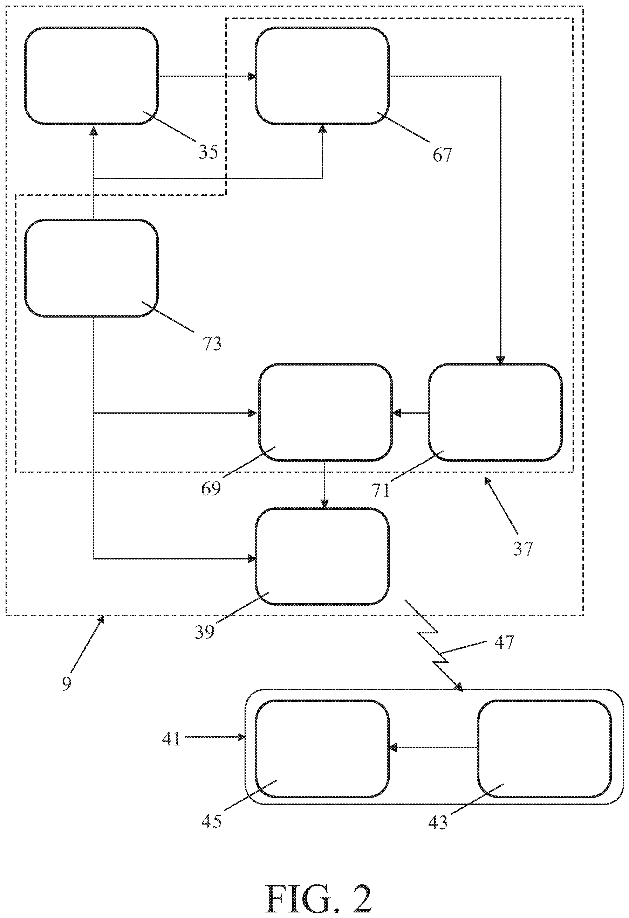

In Figure 2, the layout of a locking device 9 and the processing unit 41 of the weighing device 7 according to the invention is shown. The weighing device makes use of two locking devices provided with sensors 9 on one side of the container. This is sufficient for a weight indication since most of the containers are loaded symmetrically. These two locking devices, in turn, send the information to a processing unit that processes, maintains and passes the information to the end user by means of a user interface.

The locking device 9 has four sensors 35 which are coupled to an electronic unit 37 which is coupled to a transmitter 39. The electronic unit has an amplifier 67 for amplifying the sensor signal, as well as a microcontroller 69 as a signal processing unit and an analog/digital converter 71. Which microcontroller is connected to the transmitter 39. The electronic unit 37 further has a voltage source 73 which is coupled to the amplifier 67 and the transmitter 39. The processing unit 41 has a receiver 43 and a calculation unit 45 which calculates the weight of the stack of containers from the sensor signals.

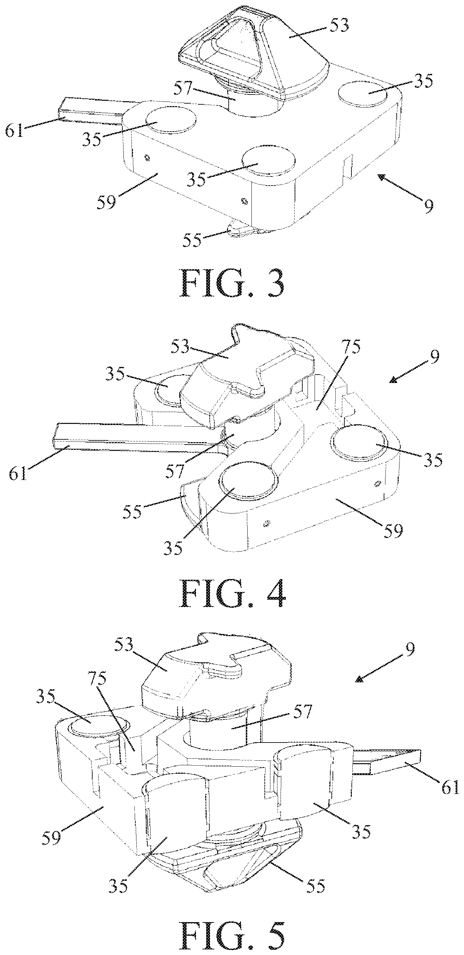

In Figures 3-5 a first embodiment of the locking device 9 according to the invention is shown in perspective. The locking device has a body 59 which is provided with a through-hole with therein a rotatable shaft 57 which protrudes with both ends outside the body and which is provided at the ends with locking elements 53, 55. The shaft with the locking elements can be rotated by means of a lever attached to the shaft 61.

The locking device 9 is provided with four sensors 35 which are each present in a recess present in the body and project with the ends outside the body. The sensors are located on the corner points of an imaginary square. A further recess 75 is provided in the body, in this further recess the electronic unit and the transmitter and battery coupled thereto (voltage source) can be accommodated.

On the top side and below the bottom of the body a cover can be provided which protects the sensors against damage and which only rests on the sensors. The lower cover then comes to rest on the container foundation whereby the sensors rest on the bottom cover, and on the upper cover, which rests on the sensors, a corner casting of the container will be located.

As container ships are equipped with this measuring system, it is actually possible for a ship's officers to take action and to be pro active and in good time (ie before leaving for sea) so that the problem of overloaded containers belong to the past.

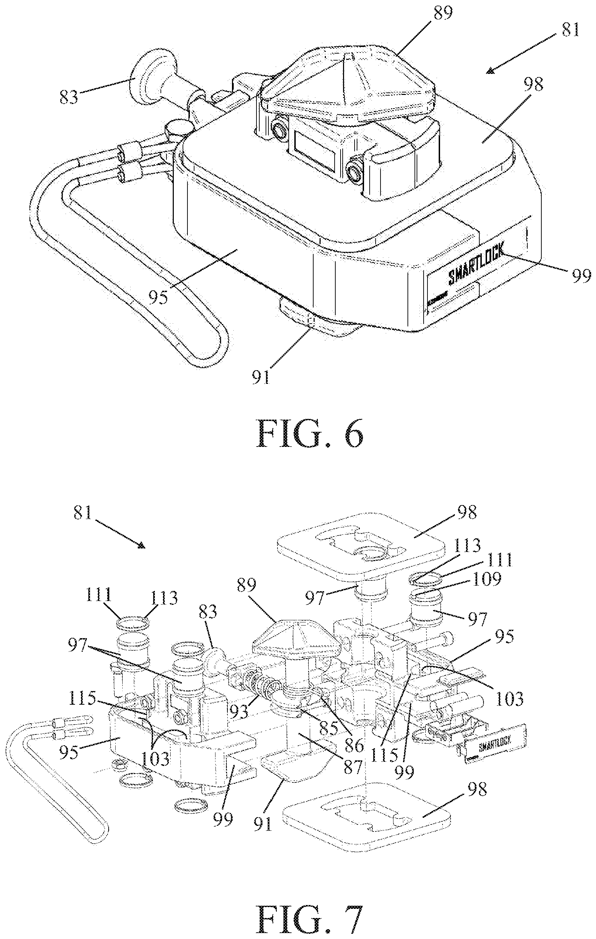

In Figures 6 and 7 a second embodiment of the locking device according to the invention is shown respectively in perspective view and exploded in parts. Instead of with a lever, in this embodiment, the locking device 81 is provided with a pull knob 83 which is connected to an arm 86 which is attached to a rotatable shaft 87 to which locking elements 89 and 91 are attached via a cable 85. By pulling the pull knob against the pulling force of spring 93 the shaft and thereby also the locking elements twist between a locking position and a release position. Due to this pull button the housing (body 95) has to be less attenuated so that the locking device can be carried out more robust. Furthermore, to operate the locking device less space is needed around the locking device.

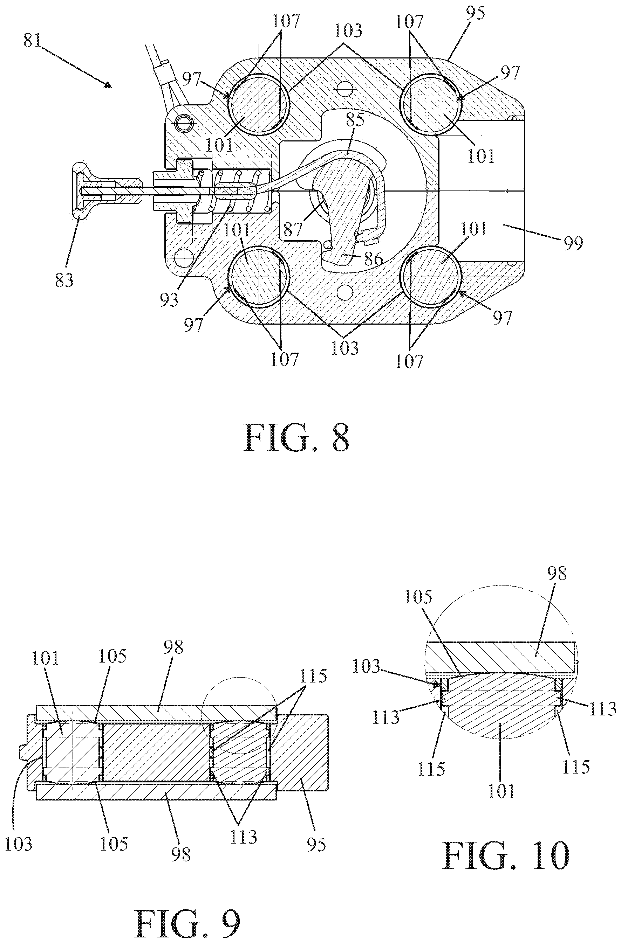

Also this locking device 81 is provided with four sensors 97, see Figure 7, which are each formed by a cylinder 101 having bonded thereto two strain gauges 107 (see Figure 8) and which are each present in a through-hole 103 in the body. Covers 98 are located on the ends 105 of the cylinders are located lids 98 for the better distribution of the weight on the sensors. In the body, a further recess 99 is provided in which the electronic unit and the transmitter and the battery coupled thereto (voltage source) can be accommodated.

Around the cylinders 101 there are rings 111 which are each provided with an outwardly and an inwardly projecting ridge 113., These ridges are each present in a recess 109 in the outside of the cylinder and in a groove 115 in the boundary wall of the through-holes 103. These rings prevent the cylinders from rotating and make sure that the strain gauges 107 are oriented correctly.

By way of illustration, in Figures 8 and 9, the locking device is shown in vertical, respectively horizontal cross-section. The latching device 81 has four solid cylinders 101 which are present in the through-holes 103 in the solid body 95, and protrude with the ends 105 below and above the body. Two strain gauges 107 are attached to the outer side of each cylinder. These strain gauges are located opposite each other on an imaginary line through the center of the locking device.

The ends 105 of the cylinders 101 are convex in order to reduce the chance that the cylinders will bend under load. On the ends 105 of the cylinders there are two covers 98 to better pass the weight of the container (s) to the cylinders.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. Thus, the weighing of a container or stack of containers may also be carried out with separate sensor units that are placed on or under the locking devices shown here, instead of the locking devices with integrated sensors.

## Claims

1. Locking device (9, 11; 81) for securing a corner casting (27-33) of a container (3) on a container foundation (17-23), the locking device (9, 11; 81) comprising:
a body (59; 95) for fitting on the container foundation (17), on which the container (3) with a corner casting (27) is stowed;
at least one sensor (35; 97) which emits a measuring signal related to the weight loaded on top of the locking device (9, 11; 81); and
an electronic unit (37) coupled to the sensor (35; 97), as well as a transmitter (39) connected to the electronic unit (37);
**characterized in that**
the sensor (35; 97) is arranged between the container casting and the container foundation (17-23); and **in that**
the sensor (35; 97) comprises two strain gauges (107) which are arranged on the wall of a cylinder (101), which cylinder is arranged in a through hole (103) in the body (59; 95) and protrudes above and below the body.

2. Locking device (9, 11; 81) according to claim 1, **characterized in that** both ends (105) of the cylinder (101) have a convex shape.

3. Locking device (9, 11; 81) according to claim 1 or 2, **characterized in that** the locking device (9, 11; 81) comprises three further cylinders (101) provided with strain gauges (107).

4. Locking device (9, 11; 81) according to claim 2 or 3, **characterized in that** the locking device (9, 11; 81) further comprises two covers (98) arranged on the ends (105) of the cylinders (101).

5. Locking device (9, 11; 81) according to any one of claims 1 to 4, **characterized in that** the body (59; 95) is provided with a through hole with a rotatable shaft (57; 87) in it, both ends of the shaft protrude outside the body and are provided with locking elements (53, 55; 89, 91) mounted on the shaft.

6. Weighing device (7) for determining the weight of a container or stack of containers (1) on container foundations (17-23), **characterized in that** the weighing device comprises at least one locking device (9, 11; 81) according to any one of the preceding claims and a processing unit (41) which is provided with a receiver (43) for receiving the measuring signals emanating from the transmitter (39).

7. Weighing device (7) according to claim 6, **characterized in that** the processing unit (41) further comprises a calculation unit (45) which is programmed such that the weight of the container can be determined from the received signals.

8. Method for determining the weight of a container or stack of containers (1) with the aid of the weighing device (7) according to claim 7, wherein on at least one of four existing container foundations (17, 19), which are present on corner points of an imaginary rectangle having the size of the bottom (25) of the container (3), a locking device (9, 11; 81) according to any one of the claims 1 to 5 is present, and on the other container foundations (21, 23) locking devices (13, 15) without sensors are present, and that after the placing of a container (3) on the locking devices present on the container foundations or on the container or stack of containers already present on the locking devices, the weight of the container or stack of containers is determined from the measurement signals originating from the sensors (47, 49) with the aid of the calculation unit (45) and this weight is stored.

9. A method for determining the weight of a container which is placed with its corner castings (27, 29, 31, 33) at the corners of the bottom on four existing container foundations (17, 19) at corner points of an imaginary rectangle having the size of the bottom (25) of the container (3), wherein before the container (3) with its corner castings (27, 29, 31, 33) is placed on the container foundations (17, 19), first locking elements (9, 11; 81) according to any one of the claims 1 to 5 are arranged on the container foundations (17, 19), and after placing of the container (3), the corner castings (27, 29, 31, 33) are locked to the container foundations (17, 19) by means of these locking elements (9, 11; 81), **characterized in that**, before the locking elements (13, 15 are arranged on the container foundations (17, 19), first, on at least one of the container foundation (17, 19) a sensor unit (35; 97) is placed or, after the locking elements (9, 11; 81) are placed on the container foundations (17, 19), a sensor unit (35; 97) is placed on at least one of the locking elements (9, 11; 81), and after the container with the corner castings (27, 29, 31, 33) is arranged on the locking elements (9, 11; 81) and/or the sensor unit (35; 97), a signal related to the weight on the sensor unit (35; 97) and transmitted by the sensor unit (35; 97) is received with a processing unit (41) and the weight of the container (3) is determined from this signal by the processing unit (41).

## Patentansprüche

1. Verriegelungsvorrichtung (9, 11; 81) zur Sicherung eines Eckbeschlags (27-33) eines Behälters (3) auf einem Behältersockel (17-23), wobei die Verriegelungsvorrichtung (9, 11; 81) aufweist:
einen Körper (59; 95) zur Befestigung auf dem Behältersockel (17), auf dem der Behälter (3) mit einem Eckbeschlag (27) gelagert ist;
mindestens einen Sensor (35; 97), der ein Messsignal bezüglich des oben auf der Verriegelungsvorrichtung (9, 11; 81) aufgeladenen Gewichtes ausgibt; und
eine elektronische Einheit (37), die mit dem Sensor (35; 97) gekoppelt ist, sowie einen Sender (39), der mit der elektronischen Einheit (37) verbunden ist;
**dadurch gekennzeichnet, dass**
der Sensor (35; 97) zwischen dem Behälterbeschlag und dem Behältersockel (17-23) angeordnet ist; und dadurch, dass
der Sensor (35; 97) zwei Dehnungsmessstreifen (107) aufweist, die auf der Wand eines Zylinders (101) angeordnet sind, wobei der Zylinder in einem Durchgangsloch (103) in dem Körper (59; 95) angeordnet ist und über und unter dem Körper hervorsteht.

2. Verriegelungsvorrichtung (9, 11; 81) nach Anspruch 1, **dadurch gekennzeichnet, dass** beide Enden (105) des Zylinders (101) eine konvexe Form aufweisen.

3. Verriegelungsvorrichtung (9, 11; 81) nach Anspruch 1 oder 2, **dadurch gekennzeichnet, dass** die Verriegelungsvorrichtung (9, 11; 81) drei weitere Zylinder (101) aufweist, die über Dehnungsmessstreifen (107) verfügen.

4. Verriegelungsvorrichtung (9, 11; 81) nach Anspruch 2 oder 3, **dadurch gekennzeichnet, dass** die Verriegelungsvorrichtung (9, 11; 81) ferner zwei Abdeckplatten (98) aufweist, die auf den Enden (105) der Zylinder (101) angeordnet sind.

5. Verriegelungsvorrichtung (9, 11; 81) nach einem der Ansprüche 1 bis 4, **dadurch gekennzeichnet, dass** der Körper (59; 95) über ein Durchgangsloch mit einer Drehwelle (57; 87) darin verfügt, wobei beide Enden der Welle nach außerhalb des Körpers hervorstehen und über Verriegelungselemente (53, 55; 89, 91) verfügen, die auf der Wellte angebracht sind.

6. Wiegevorrichtung (7) zur Bestimmung des Gewichtes eines Behälters oder eines Stapels von Behältern (1) auf Behältersockeln (17-23), **dadurch gekennzeichnet, dass** die Wiegevorrichtung mindestens eine Verriegelungsvorrichtung (9, 11; 81) nach einem der vorangegangenen Ansprüche und eine Verarbeitungseinheit (41), die über einen Empfänger (43) zum Empfangen des Messsignals, das von dem Sender (39) ausgeht, verfügt, aufweist.

7. Wiegevorrichtung (7) nach Anspruch 6, **dadurch gekennzeichnet, dass** die Verarbeitungseinheit (41) ferner eine Berechnungseinheit (45) aufweist, die derart programmiert ist, dass das Gewicht des Behälters aus den empfangenen Signalen bestimmt werden kann.

8. Verfahren zur Bestimmung des Gewichtes eines Behälters oder eines Stapels von Behältern (1) mit Hilfe der Wiegevorrichtung (7) nach Anspruch 7, wobei auf mindestens einem von vier bestehenden Behältersockeln (17, 19), die auf Eckpunkten eines imaginären Rechtecks, das die Größe des Bodens (25) des Behälters (3) aufweist, vorliegen, eine Verriegelungsvorrichtung (9, 11; 81) nach einem der Ansprüche 1 bis 5 vorliegt, und auf den anderen Behältersockeln (21, 23) Verriegelungsvorrichtungen (13, 15) ohne Sensoren vorliegen, und wobei nach dem Platzieren des Behälters (3) auf den Verriegelungsvorrichtungen, die auf den Behältersockeln oder auf dem bereits auf den Verriegelungsvorrichtungen vorliegendem Behälter oder Stapel von Behältern vorliegen, das Gewicht des Behälters oder des Stapels von Behältern mit Hilfe der Berechnungseinheit (45) aus den Messsignalen, die den Sensoren (47, 49) entstammen, bestimmt wird und dieses Gewicht gespeichert wird.

9. Verfahren zur Bestimmung des Gewichtes eines Behälters, der mit seinen Eckbeschlägen (27, 29, 31, 33) an den Ecken des Bodens auf vier bestehenden Behältersockeln (17, 19) an Eckpunkten eines imaginären Rechtecks, das die Größe des Bodens (25) des Behälters (3) aufweist, platziert ist, wobei erste Verriegelungselemente (9, 11; 81) nach einem der Ansprüche 1 bis 5 auf den Behältersockeln (17, 19) angeordnet werden, bevor der Behälter (3) mit seinen Eckbeschlägen (27, 29, 31, 33) auf den Behältersockeln (17, 19) platziert wird, und wobei die Eckbeschläge (27, 29, 31, 33) nach dem Platzieren des Behälters (3) an den Behältersockeln (17, 19) mittels dieser Verriegelungselemente (9, 11; 81) arretiert werden, **dadurch gekennzeichnet, dass** bevor die Verriegelungselemente (13, 15) auf den Behältersockeln (17, 19) angeordnet werden, zuerst eine Sensoreinheit (35; 97) auf mindestens einem der Behältersockel (17, 19) platziert wird, oder dass nachdem die Verriegelungselemente (9, 11; 81) auf den Behältersockeln (17, 19) platziert werden, eine Sensoreinheit (35; 97) auf mindestens einem der Verriegelungselemente (9, 11; 81) platziert wird, und dass nachdem der Behälter mit den Eckbeschlägen (27, 29, 31, 33) auf den Verriegelungselementen (9, 11; 81) und/oder der Sensoreinheit (35; 97) angeordnet wird, ein von der Sensoreinheit (35; 97) gesendetes Signal bezüglich des Gewichtes der Sensoreinheit (35; 97) mit einer Verarbeitungseinheit (41) empfangen wird und das Gewicht des Behälters (3) durch die Verarbeitungseinheit (41) aus diesem Signal bestimmt wird.

## Revendications

1. Dispositif de verrouillage (9, 11 ; 81) pour fixer une pièce coulée de coin (27-33) d'un contenant (3) sur une base de contenant (17-23), le dispositif de verrouillage (9, 11 ; 81) comprenant :
un corps (59 ; 95) destiné à être monté sur la base de contenant (17), sur lequel le contenant (3) avec une pièce coulée de coin (27) est rangé ;
au moins un capteur (35 ; 97) qui émet un signal de mesure lié au poids chargé sur le dessus du dispositif de verrouillage (9, 11 ; 81) ; et
une unité électronique (37) couplée au capteur (35 ; 97), ainsi qu'un émetteur (39) connecté à l'unité électronique (37) ;
**caractérisé en ce que**
le capteur (35 ; 97) est agencé entre la pièce coulée de coin du contenant et la base de contenant (17-23) ; et **en ce que**
le capteur (35 ; 97) comprend deux jauges de contrainte (107) qui sont agencées sur la paroi d'un cylindre (101), lequel cylindre est agencé dans un trou traversant (103) du corps (59 ; 95) et fait saillie au-dessus et au-dessous du corps.

2. Dispositif de verrouillage (9, 11 ; 81) selon la revendication 1, **caractérisé en ce que** les deux extrémités (105) du cylindre (101) présentent une forme convexe.

3. Dispositif de verrouillage (9, 11 ; 81) selon la revendication 1 ou 2, **caractérisé en ce que** le dispositif de verrouillage (9, 11 ; 81) comprend trois cylindres supplémentaires (101) munis de jauges de contrainte (107).

4. Dispositif de verrouillage (9, 11 ; 81) selon la revendication 2 ou 3, **caractérisé en ce que** le dispositif de verrouillage (9, 11 ; 81) comprend en outre deux couvercles (98) disposés sur les extrémités (105) des cylindres (101).

5. Dispositif de verrouillage (9, 11 ; 81) selon l'une quelconque des revendications 1 à 4, **caractérisé en ce que** le corps (59 ; 95) est pourvu d'un trou traversant avec un arbre rotatif (57 ; 87) en son sein, les extrémités de l'arbre font saillie à l'extérieur du corps et sont pourvues d'éléments de verrouillage (53, 55 ; 89, 91) montés sur l'arbre.

6. Dispositif de pesée (7) pour déterminer le poids d'un contenant ou d'une pile de contenants (1) sur des bases de contenant (17-23), **caractérisé en ce que** le dispositif de pesée comprend au moins un dispositif de verrouillage (9, 11 ; 81) selon l'une quelconque des revendications précédentes et une unité de traitement (41) qui est munie d'un récepteur (43) pour recevoir les signaux de mesure émanant de l'émetteur (39).

7. Dispositif de pesée (7) selon la revendication 6, **caractérisé en ce que** l'unité de traitement (41) comprend en outre une unité de calcul (45) qui est programmée pour que le poids du contenant puisse être déterminé à partir des signaux reçus.

8. Procédé de détermination du poids d'un contenant ou d'une pile de contenants (1) à l'aide du dispositif de pesage (7) selon la revendication 7, dans lequel au moins une de quatre bases de contenant existantes (17, 19), qui sont présentes sur des points de coin d'un rectangle imaginaire présente la taille du fond (25) du contenant (3), un dispositif de verrouillage (9, 11 ; 81) selon l'une quelconque des revendications 1 à 5 est présent, et sur les autres bases de contenant (21, 23), des dispositifs de verrouillage (13, 15) sans capteur sont présents, et en ce qu'après la mise en place d'un contenant (3) sur les dispositifs de verrouillage présents sur les bases de contenant ou sur le contenant ou sur la pile de contenants déjà présents sur les dispositifs de verrouillage, le poids du contenant ou de la pile de contenants est déterminé à partir des signaux de mesure provenant des capteurs (47, 49) à l'aide de l'unité de calcul (45), et ce poids est stocké.

9. Procédé pour déterminer le poids d'un contenant qui est placé avec ses pièces de coulée de coin (27, 29, 31, 33) au niveau des coins du fond sur quatre bases de contenant existantes (17, 19) au niveau des points de coin d'un rectangle imaginaire présentant la taille du fond (25) du contenant (3), dedans lequel avant que le contenant (3) avec ses pièces coulées de coin (27, 29, 31, 33) soit placé sur les bases de contenant (17, 19), des premiers éléments de verrouillage (9, 11 ; 81) selon l'une quelconque des revendications 1 à 5 sont agencés sur les bases contenant (17, 19), et après la mise en place du contenant (3), les pièces coulées de coin (27, 29, 31, 33) sont verrouillés aux bases de contenant (17, 19) au moyen de ces éléments de verrouillage (9, 11 ; 81), **caractérisé en ce qu'**avant que les éléments de verrouillage (13, 15) soient agencées sur les bases de contenant (17, 19), tout d'abord, sur au moins l'une des bases de contenant (17, 19), une unité de capteur (35 ; 97) est mise en place ou, après que les éléments de verrouillage (9, 11 ; 81) aient été mis en place sur les bases de contenant (17, 19), une unité de capteur (35 ; 97) est mise en place sur au moins un des éléments de verrouillage (9, 11 ; 81), et après que le contenant avec les pièces coulées de coin (27, 29, 31, 33) ait été agencé sur les éléments de verrouillage (9, 11 ; 81) et/ou l'unité de capteur (35 ; 97), un signal lié au poids sur l'unité de capteur (35 ; 97) et transmis par l'unité de capteur (35 ; 97) est reçu à l'aide d'une unité de traitement (41) et le poids du contenant (3) est déterminé à partir de ce signal par l'unité de traitement (41).
